# EUROPEAN PATENT SPECIFICATION

(11) **EP 3 344 369 B1**
(45) Date of publication and mention of the grant of the patent: **23.03.2022**
(21) Application number: 16757410.2
(22) Date of filing: 10.08.2016
(51) Int. Cl.: B01D 53/04, B01D 53/047, B01D 53/26, C10L 3/10

(54) **APPARATUS AND SYSTEM FOR RAPID CYCLE SWING ADSORPTION PROCESSES RELATED THERETO**
VORRICHTUNG UND SYSTEM FÜR SCHNELLE ZYKLUSÄNDERUNGSADSORPTIONSPROZESSE DAMIT
APPAREIL ET SYSTÈME POUR PROCÉDÉS D'ADSORPTION MODULÉE À CYCLE RAPIDE ASSOCIÉS À CELUI-CI

(30) Priority: 02.09.2015 US 201562213262 P
(43) Date of publication of application: 11.07.2018
(73) Proprietor: ExxonMobil Upstream Research Company, Spring, TX 77389 (US)
(72) Inventor: JOHNSON, Robert, A., Doylestown, PA 18902 (US); DECKMAN, Harry, W., Clinton, NJ 08809 (US); KELLEY, Bruce, T., Porter, TX 77365 (US); OELFKE, Russell, H., Houston, TX 77084 (US); RAMKUMAR, Shwetha, Cypress, TX 77433 (US)
(74) Representative: ExxonMobil Chemical Europe Inc.
(86) International application number: PCT/US2016/046361
(87) International publication number: WO 2017/039988

(56) References cited:
- US-A- 5 486 227
- US-A1- 2012 312 163

## Description

### FIELD

The present techniques relate to a system associated with an enhanced swing adsorption process. In particular, the system relates to a swing adsorption process for the removing contaminants from a feed stream, such as dehydration of natural gas, utilizing rapidly cycled adsorbent beds. This system may be used for dehydrating a feed stream to satisfy liquefied natural gas (LNG) specifications for LNG plants and/or specifications for other plants.

### BACKGROUND

Gas separation is useful in many industries and can typically be accomplished by flowing a mixture of gases over an adsorbent material that preferentially adsorbs one or more gas components, while not adsorbing one or more other gas components. The non-adsorbed components are recovered as a separate product.

One particular type of gas separation technology is swing adsorption, such as temperature swing adsorption (TSA), pressure swing adsorption (PSA), partial pressure swing adsorption (PPSA), rapid cycle pressure swing adsorption (RCPSA), rapid cycle partial pressure swing adsorption (RCPPSA), and not limited to, but also combinations of the fore mentioned processes, such as pressure and temperature swing adsorption. As an example, PSA processes rely on the phenomenon of gases being more readily adsorbed within the pore structure or free volume of an adsorbent material when the gas is under pressure. That is, the higher the gas pressure, the greater the amount of readily-adsorbed gas adsorbed. When the pressure is reduced, the adsorbed component is released, or desorbed from the adsorbent material.

The swing adsorption processes (e.g., PSA and/or TSA) may be used to separate gases of a gas mixture because different gases tend to fill the micropore of the adsorbent material to different extents. For example, if a gas mixture, such as natural gas, is passed under pressure through a vessel containing an adsorbent material that is more selective towards carbon dioxide than it is for methane, at least a portion of the carbon dioxide is selectively adsorbed by the adsorbent material, and the gas exiting the vessel is enriched in methane. When the adsorbent material reaches the end of its capacity to adsorb carbon dioxide, it is regenerated by reducing the pressure, thereby releasing the adsorbed carbon dioxide. The adsorbent material is then typically purged and repressurized. Then, the adsorbent material is ready for another adsorption cycle.

The swing adsorption processes typically involve adsorbent bed units, which include adsorbent beds disposed within a housing configured with maintain fluids at various pressures for different steps in an adsorption cycle within the unit. These adsorbent bed units utilize different packing material in the bed structures. For example, the adsorbent bed units utilize checker brick, pebble beds or other available packing. As an enhancement, some adsorbent bed units may utilize engineered packing within the bed structure. The engineered packing may include a material provided in a specific configuration, such as a honeycomb, ceramic forms or the like.

Further, various adsorbent bed units may be coupled together with conduits and valves to manage the flow of fluids. Orchestrating these adsorbent bed units involves coordinating the cycles for each of the adsorbent bed units with other adsorbent bed units in the system. A complete cycle can vary from seconds to minutes as it transfers a plurality of gaseous streams through one or more of the adsorbent bed units.

US 2012/0312163 A1 discloses a temperature swing adsorption process for separating a target species from a feed gas mixture comprising an adsorption step using an adsorbent bed, stopping the introduction the feed gas, a pressure reducing step, an external heating step of the adsorbent bed to 10 °C to 300 °C under a flow of purge gas, a cooling step and a repressurization step.

US 5,486,227 A discloses a process integrating temperature swing adsorption (TSA), pressure swing adsorption (PSA) and cryogenic distillation to optimize overall performance in purifying and liquefying a feed gas mixture containing a less strongly adsorbed component of lower volatility.

Unfortunately, conventional processes for dehydration of natural gas streams are typically performed using large molecular sieve adsorbent beds, wherein the thermal swing cycle is hours long. This conventional process requires large and expensive high pressure adsorbent beds, a large inventory of adsorbent material, and involves large footprints and weights, capital investment and fuel usage for gas furnaces. Indeed, in these processes, the adsorption front progresses through the majority of the adsorbent bed's length, and desorption is accomplished using dry gas heated to over 500 °F (Fahrenheit) (260 °C (Celsius), which is heated with a fired furnace. The conventional TSA molecular sieve process uses high temperature purge gas (e.g., at or even above 500 °F (260 °C)) to completely dehydrate the adsorbent beds during each cycle. High temperature purge gas is used in conventional TSA molecular sieve process to minimize the volume of regeneration gas required. This process is driven by economic and expenditure considerations, because handling the regeneration gas volumes (e.g., via recycle compression or some other method) is more costly than simply heating the regeneration gas to a higher temperature. Thus, the regeneration gas temperature is limited to around 500 °F (260 °C) to avoid molecular sieve degradation. Yet, even limiting the regeneration gas to 500 °F (260 °C), the high temperature purge gas results in problems, such as hydrothermal degradation of the adsorbent particles and coke formation within the adsorbent bed leading to deactivation and associated downtime. Additionally, the use of a fired furnace in a natural gas plant is a safety concern that involves additional safety measures to manage.

In addition, for floating operations, the size and weight of conventional TSA molecular sieve process are problematic for stability and buoyance considerations. In particular, the excessive weight and footprint for conventional systems add to the complexity of the floating facility and increase the size of the facilities. Additionally, the floating facilities may be remotely located and may be difficult to access and resupply the equipment and fuel. Also, the additional size and complexity increase the capital investment costs along with the operating costs for the floating facilities. In addition, as noted above, the use of a fired furnace is further complicated by the limited space available.

Accordingly, there remains a need in the industry for apparatus, methods, and systems that provided an enhancements to the processing of streams to remove contaminants, such as processing the natural gas streams prior to liquefaction into an LNG feed stream. The present techniques provide a reduction in cost, size, and weight of facilities for natural gas dehydration prior to liquefaction. Further, a need remains for a dehydration process that does not use purge gases heated to over 500 °F (260 °C) and does not use fire heaters.

### SUMMARY OF THE INVENTION

The present invention is concerned with a method according to claim 1 and a system according to claim 12. In one or more embodiments of the present disclosure, the present techniques include a process for removing contaminants from a gaseous feed stream. The process comprising: a) performing one or more adsorption steps; wherein each of the one or more adsorption steps comprises passing a gaseous feed stream at a feed pressure and a feed temperature through an adsorbent bed unit to separate one or more contaminants from the gaseous feed stream to form a product stream; b) performing one or more depressurization steps, wherein the pressure of the adsorbent bed unit is reduced by a predetermined amount with each successive depressurization step; c) performing one or more purge steps, wherein each of the one or more purge steps comprise passing a purge stream into the adsorbent bed unit, wherein the purge stream flows countercurrent to the direction of the feed stream, the purge stream is provided at a temperature at least 50 °F (27.8 °C) above the feed temperature (or at least 100 °F (55.6 °C) above the feed temperature) and less than 450 °F (232.2 °C) and the purge stream flow rate is equal to or less than 20 molar percent (%) of the feed stream flow rate (e.g., the purge stream may contain equal to or less than 20 molar % of the hydrocarbons, such as methane, in the feed stream or preferably equal to or less than 10 molar % of the hydrocarbons, such as methane, in the feed stream); d) performing one or more re-pressurization steps, wherein the pressure within the adsorbent bed unit is increased with each re-pressurization step by a predetermined amount with each successive re-pressurization step; and e) repeating the steps a) to d) for at least one additional cycle, wherein the cycle duration is for a period greater than 1 second and less than 600 seconds, preferably period greater than 2 second and less than 300 seconds or preferably period greater than 1 second and less than 90 seconds. The purge stream may be provided in a range between 200 °F (93.3 °C) and 450 °F (232.2 °C) or in a range between 250 °F (121.1 °C) and 380 °F (193.3 °C).

In another embodiment of the present disclosure, a system for removing contaminants from a gaseous feed stream is described. The system comprises: an adsorbent bed unit, a liquefied natural gas process unit and one or more purge unit. The adsorbent bed unit is configured to separate contaminants from a gaseous feed stream and to output a product stream, wherein the gaseous feed stream is provided at a feed temperature. The liquefied natural gas process unit is configured to receive the product stream and separate the product stream into a final product stream and a flash fuel stream. One or more purge units is configured to provide a purge stream to the adsorbent bed unit, wherein the purge stream is provided from one of a portion of the product stream, the flash fuel stream, a boil off gas stream and any combination thereof; and wherein the purge stream is provided at a temperature at least 50°F (27.8 °C) above the feed temperature and less than 450 °F (232.2 °C) and the purge stream contains equal to or less than 20 molar% of the hydrocarbons in the gaseous feed stream. The purge stream may be passed through the adsorbent bed unit at a temperature at least 100 °F (55.6 °C) above the feed temperature) and the purge stream may contain equal to or less than 20 molar % of the methane in the feed stream or preferably equal to or less than 10 molar % of the methane in the feed stream. The one or more purge units may comprise one or more compressors configured to compress one of the flash fuel stream, a boil off gas stream and any combination thereof.

### BRIEF DESCRIPTION OF THE FIGURES

The foregoing and other advantages of the present disclosure may become apparent upon reviewing the following detailed description and drawings of non-limiting examples of embodiments.
Figure 1 is a three-dimensional diagram of the swing adsorption system with six adsorbent bed units and interconnecting piping in accordance with an embodiment of the present techniques.
Figure 2 is a diagram of a portion of an adsorbent bed unit having associated valve assemblies and manifolds in accordance with an embodiment of the present techniques.
Figure 3 is a diagram of a conventional system for dehydration of a feed stream to form a liquefied natural gas (LNG) stream.
Figure 4 is an exemplary diagram for dehydration of a feed stream to form a liquefied natural gas (LNG) stream in accordance with an embodiment of the present techniques.
Figures 5A. 5B amd 5C are exemplary diagrams associated with the configuration in Figure 4 in accordance with an embodiment of the present techniques.
Figures 6A, 6B and 6C are exemplary diagrams associated with the configuration in Figure 4 in accordance with an embodiment of the present techniques.

### DETAILED DESCRIPTION OF THE INVENTION

Unless otherwise explained, all technical and scientific terms used herein have the same meaning as commonly understood by one of ordinary skill in the art to which this disclosure pertains. The singular terms "a," "an," and "the" include plural referents unless the context clearly indicates otherwise. Similarly, the word "or" is intended to include "and" unless the context clearly indicates otherwise. The term "includes" means "comprises." In case of conflict as to the meaning of a term or phrase, the present specification, including explanations of terms, control. Directional terms, such as "upper," "lower," "top," "bottom," "front," "back," "vertical," and "horizontal," are used herein to express and clarify the relationship between various elements. It should be understood that such terms do not denote absolute orientation (e.g., a "vertical" component can become horizontal by rotating the device). The materials, methods, and examples recited herein are illustrative only and not intended to be limiting.

As used herein, "stream" refers to fluid (e.g., solids, liquid and/or gas) being conducted through various equipment. The equipment may include conduits, vessels, manifolds, units or other suitable devices.

As used herein, volume percent is based on standard conditions. The standard conditions are normalized to the temperature of 0 °C (e.g., 32 °F) and absolute pressure of 100 kiloPascals (kPa) (1 bar).

As used herein, "conduit" refers to a tubular member forming a channel through which something is conveyed. The conduit may include one or more of a pipe, a manifold, a tube or the like.

The present techniques relate to a swing adsorption process (e.g., a rapid cycle process) for the dehydration of a feed stream (e.g., natural gas) utilizing rapidly cycled adsorbent beds. The process may involve adsorbent beds that are partially depressurized and heated by a counter-current gas flow of moderately hot dry product gas to thermally assisted partial pressure purge desorption (e.g., a purge stream). In contrast to conventional approaches, the present techniques utilize lower temperature purge streams, which may not completely dehydrate the adsorbent bed. As a result, the temperature in the purge stream may be generated by other means than gas furnaces, such as solely by compression. The lower temperatures in the purge stream may be utilized to provide cost and safety benefits, along with operational enhancements. For example, the lower temperate may lessen hydrothermal degradation of the adsorbent and lessen coke formation. Further, the present techniques may be less expensive compared to conventional TSA molecular sieve systems and have a smaller footprint by using adsorbent beds rather than conventional TSA molecular sieve dehydration.

As one enhancement, the present techniques use a purge stream having lower temperatures (e.g., less than 450 °F (232.2 °C)) than conventional approaches. The purge stream may be less than 450 °F (232.2 °C) and preferably less than 360 °F (182.2 °C). For example, the temperature in the purge stream may range between a temperature approximately 50 °F (27.8 °C) above the feed temperature and 450 °F (232.2 °C), may range between a temperature approximately 100 °F (55.6 °C) above the feed temperature and 450 °F (232.2 °C), may range between 200 °F (93.3 °C) and 450 °F (232.2 °C), may range between 250 °F (121.1 °C) and 380 °F (193.3 °C), and/or may range between 280 °F (137.8 °C) and 360 °F (182.2 °C). The purge stream may also be a dry purge gas, which is used to heat the adsorbent bed during desorption. The lower temperature may lessen the hydrothermal degradation of the adsorbent materials and may lessen the formation of coke. Further, the lower temperature purge stream may be generated from the use of compression, which may be only source of the heat for this purge gas. In some embodiments, the lower temperature purge gas may be heated solely by compression, thus eliminating a fired heater and thus reducing capital investment and enhancing safety.

Also, the present techniques may also include various pressures for the feed stream and the purge stream. For example, the feed pressure of the feed stream may be based on the preferred adsorption feed pressure, which may be in the range from 400 pounds per square inch absolute (psia) (27.58 bara) to 1,400 psia (96.53 bara), in the range from 600 psia (41.4 bara) to 1,200 psia (82.74 bara). Also, the purge pressure of the purge stream may be based on the preferred adsorbent purge pressure, which may be in the range from 200 pounds per square inch absolute (psia) (13.8 bara) to 800 psia (55.2 bara), in the range from 400 psia (27.58 bara) to 600 psia (41.4 bara).

Further, another enhancement is that the purge stream contains a portion of the feed stream. By way of example, the purge stream flow rate may be equal to or less than 20 molar percent (%) of the feed stream flow rate; the purge stream flow rate may be equal to or less than 15 molar % of the feed stream flow rate; or the purge stream flow rate may be equal to or less than 10 molar % of the feed stream flow rate. Further, the purge stream flow rate may be greater than or equal to 1 molar % of the feed stream flow rate; the purge stream flow rate may greater than or equal to 3 molar % of the feed stream flow rate; or the purge stream flow rate may be greater than or equal to 5 molar % of the feed stream flow rate. As another example, the purge stream may contain equal to or less than 20 molar % of the hydrocarbons, such as methane, in the feed stream; or preferably equal to or less than 10 molar % of the hydrocarbons, such as methane, in the feed stream. Further, the purge stream may contain equal to or greater than 1 molar % of the hydrocarbons, such as methane, in the feed stream; preferably equal to or greater than 3 molar % of the hydrocarbons, such as methane, in the feed stream, or preferably equal to or greater than 5 molar % of the hydrocarbons, such as methane, in the feed stream. As a specific example, the purge stream, which includes a portion of the methane from the feed stream, may include equal to or less than 20 molar % of the methane in the feed stream, equal to or less than 15 molar % of the methane in the feed stream, equal to or less than 10 molar % of the methane in the feed stream, or equal to or less than 7 molar % of the methane in the feed stream.

Further, the purge stream may include a portion of the feed stream. By way of example, the portion of the methane in the purge stream may be equal to or greater than 1 molar % of the methane in the feed stream; or preferably equal to or greater than 3 molar % of the methane in the feed stream; or preferably equal to or greater than 5 molar % of the methane in the feed stream. Also, the portion of the hydrocarbons in the purge stream may be equal to or greater than 1 molar % of the hydrocarbons in the feed stream; or preferably equal to or greater than 3 molar % of the hydrocarbons in the feed stream; or preferably equal to or greater than 5 molar % of the hydrocarbons in the feed stream. As yet another example, the purge stream flow rate may be equal to or greater than 1 molar percent (%) of the feed stream flow rate; the purge stream flow rate may be equal to or greater than 3 molar % of the feed stream flow rate; or the purge stream flow rate may be equal to or greater than 5 molar % of the feed stream flow rate.

As another enhancement, the present techniques may provide dehydration through the use of a rapid cycle swing adsorption process, such as a TSA process. While the swing capacity per mass of the adsorbent bed may be less than conventional TSA molecular sieve dehydration, without the requirement for complete drying of the adsorbent bed (e.g., directionally making the quantity of adsorbent per feed volume required larger), the use of rapid cycles may lessen the adsorbent quantity as compared to conventional TSA molecular sieve dehydration in that the required adsorbent quantity is ten to more than one hundred times smaller than conventional TSA molecular sieve dehydration, which depends on the specific configuration. Also, lower temperatures of adsorbent bed heating may be utilized without the required complete drying of the adsorbent bed. Accordingly, the lower temperature of the purge stream in the purge step of the present techniques may be heated by compression only, lessening or eliminating costly heat exchangers or fired heaters. Additionally, the present techniques may combine thermal swing adsorption with a pressure swing adsorption to further enhance the process.

In the present techniques, the product end of the adsorbent bed is maintained nearly dry (e.g., the water loading for the region near the product end is less than 1 mole per kilogram (mol/kg), is less than 0.5 mol/kg, or is less than 0.1 mol/kg), but it may not need to be fully dry the feed end of the adsorbent bed. The feed end or feed side is the end of the adsorbent bed that the feed stream initially enters, while the product end is the portion of the adsorbent bed opposite from the feed end and where the feed stream exits the adsorbent bed. The loading level of water may be lower on the feed side of the adsorbent bed during the purge step, but the length of adsorbent bed that contains water is reduced during the purge step. For example, an adsorbate loaded region may be a specific portion of the adsorbent bed from the feed end of the adsorbent bed to 10% of the bed length, from the feed end of the adsorbent bed to 40% of the bed length or from the feed end of the adsorbent bed to 75% of the bed length. The product region may be a specific portion of the adsorbent bed from the product end of the adsorbent bed to 10% of the bed length, from the product end of the adsorbent bed to 25% of the bed length or from the product end of the adsorbent bed to 40% of the bed length. Utilizing only a portion of the bed length ensures that the product end of the adsorbent bed remains rigorously dry and provides extremely low product water concentrations. Further, maintaining a significant portion of the product end of the adsorbent bed dry provides flexibility for nonuniformity of gas passage channels in embodiments where a structured adsorbent, such as a monolith, is used for the adsorber structure or adsorbent bed. The movement of the wet front back during purge step and forward during the adsorption step is the basis of the swing capacity of the process. In part, this is achieved by using a limited, cost effective quantity of purge gas in the purge steam in this process and configuration.

In addition, the present techniques may be integrated into various configurations to provide additional functionality. For example, the present techniques may be utilized, but not limited, for dehydration of a stream prior to and integrated with a liquefied natural gas (LNG) plant, which may involve removing contaminants to LNG specifications. Other integrations may include cryogenic natural gas liquefaction recovery plant, control freeze zone plants or other such plants. Regardless, the present techniques may be used to treat gases containing higher or lower amounts of water and for CO₂ levels as high as about 500 parts per million molar (ppm) to LNG specifications. The present techniques may also be used to remove contaminants to other specifications, such as cryogenic natural gas liquefaction specifications for a cryogenic natural gas liquefaction recovery plant or the like. The process of partially heating the adsorbent bed utilizing a thermal wave during a purge step coupled with rapid cycles provides enhancements, such as economical enhancements, to other thermal swing adsorption separations known to those skilled in the art.

Beneficially, the present techniques provide various advantages. For example, the present techniques provide a modular design and may be configured to lessen the footprint, weight, and capital expense of processes to treat dehydration of feed streams (e.g., natural gas) utilizing rapidly cycled adsorbent beds. The present techniques may be used for liquefied natural gas (LNG) plants and the other suitable plants. Also, as this process does not involve the use any fired furnaces, the present techniques may eliminate the use of fired furnaces or high temperature heat exchanger from the process. The removal of such equipment is inherently safer due to the elimination of the flames along with the associated equipment and may lower fuel consumption and greenhouse gas (GHG) emissions due to lack of combustion in a furnace. Further, the present techniques may increase flexibility regarding the selection of adsorbent material used in the process, may reduce dust formation due to monolithic adsorbent bed design, may lessen solid waste production due to lower adsorbent quantities and/or may lessen adsorption of heavy hydrocarbons (e.g., C₂+) due to low adsorbent quantities. The present techniques may also lower impact on downstream process equipment when switching adsorbent beds due to the modular configuration of the rapid cycle TSA equipment providing some of the adsorbent beds to be replaced or regenerated off-line, while the remainder of the adsorbent bed units continue to provide dry product to the downstream equipment (e.g., LNG or cryogenic separation plant).

In one or more embodiments, the swing adsorption system may include one or more purge units in fluid communication with a liquefied natural gas process unit. The purge units may be configured to provide a purge stream to each of the adsorbent bed units, wherein the purge stream is provided from one of a portion of the product stream, the flash fuel stream, a boil off gas stream and any combination thereof. By way of example, the purge units may be or include one or more compressors configured to compress one of the flash fuel stream, a boil off gas stream and any combination thereof. Also, the purge units may be or include one or more pressure reduction devices (e.g., expanders or valve) configured to decompress the portion of the product stream. The portion of the product stream may be from any one of the adsorbent bed units within the swing adsorption system.

Also, in one or more embodiments, the present techniques can be used for any type of swing adsorption process. Non-limiting swing adsorption processes for which the present techniques may include pressure swing adsorption (PSA), vacuum pressure swing adsorption (VPSA), temperature swing adsorption (TSA), partial pressure swing adsorption (PPSA), rapid cycle pressure swing adsorption (RCPSA), rapid cycle thermal swing adsorption (RCTSA), rapid cycle partial pressure swing adsorption (RCPPSA), as well as combinations of these processes, such as pressure/temperature swing adsorption. Exemplary kinetic swing adsorption processes are described in U.S. Patent Application Publication Nos. 2008/0282892, 2008/0282887, 2008/0282886, 2008/0282885, 2008/0282884 and 2014/0013955.

Adsorptive separation processes, apparatus, and systems, as described above, are useful for development and production of hydrocarbons, such as gas and oil processing. Particularly, the provided processes, apparatus, and systems are useful for the rapid, large scale, efficient separation of a variety of target gases from gas mixtures. In particular, the processes, apparatus, and systems may be used to prepare feed products (e.g., natural gas products) by removing contaminants (e.g., CO₂, H₂O and heavy hydrocarbons (i.e. hydrocarbons having at least two carbon atoms)). The provided processes, apparatus, and systems are useful for preparing gaseous feed streams for use in utilities, including separation applications. The separation applications may include dew point control; sweetening and/or detoxification; corrosion protection and/or control; dehydration; heating value; conditioning; and/or purification. Examples of utilities that utilize one or more separation applications include generation of fuel gas; seal gas; non-potable water; blanket gas; instrument and control gas; refrigerant; inert gas; and/or hydrocarbon recovery.

In certain embodiments, the present techniques may be used to remove contaminants feed streams, such as acid gas from hydrocarbon streams. Acid gas removal technology may be useful for gas reserves exhibit higher concentrations of acid gas (e.g., sour gas resources). Hydrocarbon feed streams vary widely in amount of acid gas, such as from several parts per million acid gas to 90 volume percent (vol. %) acid gas. Non-limiting examples of acid gas concentrations from exemplary gas reserves include concentrations of at least: (a) 1 vol.% H₂S, 5 vol.% CO₂, (b) 1 vol.% H₂S, 15 vol.% CO₂, (c) 1 vol.% H₂S, 60 vol.% CO₂, (d) 15 vol.% H₂S, 15 vol.% CO₂, and (e) 15 vol.% H₂S, 30 vol.% CO₂. Accordingly, the present techniques may include equipment to remove various contaminants, such as H₂S and CO₂ to desired levels. In particular, the H₂S may be lowered to levels less than 4 ppm, while the CO₂ may be lowered to levels less than 100 ppm or less than 50 ppm.

In other embodiments, the present techniques may be used to lessen the water content of the stream to a specific level by the swing adsorption process. For example, the water content of a feed stream may range from a few ppm to saturation levels in the stream. In particular, the water content may range from a few hundred ppm to saturation levels, such as 100 ppm to 1,500 ppm dependent on the feed pressure or 500 ppm to 1,500 ppm dependent on the feed pressure. The specific water level of the product stream from the swing adsorption process may be related to dew point of desired output product (e.g., the dew point from the water content should be lower than the lowest temperature of the stream in a subsequent process, such as liquefaction and is related to the feed pressure and feed composition). For LNG applications, the water content may be less than 0.1 ppm, as the dew point may be -260 °F (-162.2 °C). For cryogenic Natural Gas Liquid (NGL) recovery applications, the water content may be less than 1 ppm, as the dew point may be about -150 °F (-101.1 °C). For controlled freeze zone (CFZ) applications, the water content may be less than 10 ppm, as the dew point may be about -60 °F (-51.1 °C). The water content of the product stream may be less than (<) 0.1 parts per million volume (ppmv); < 10 ppmv, < 1ppmv or < 0.1 ppmv. By way of example, the gaseous feed stream may include hydrocarbons and H₂O, wherein the H₂O is in the range of 0.2 parts per million volume to saturation levels in the gaseous feed stream or the H₂O may be in the range of 100 ppmv to 1500 ppmv.

In certain embodiments, the gaseous feed stream entering the swing adsorption process or one of the adsorbent bed units may be conditioned to address problems with the pressure drop from passing through the poppet valves. This pressure drop from the poppet valves may result in a liquid drop out within the adsorbent bed. To avoid the liquid drop out, the gaseous feed stream may be heated to lessen or eliminate the liquid dropout. By way of example, the gaseous feed stream may be passed through a heater or heat exchanger to increase the temperature of the gaseous feed stream to lessen or eliminate liquid dropout. The gaseous feed stream may have the temperature increased by at least 2 °F (1.1 °C), at least 5 °F (2.8 °C) or at least 20 °F (11.1 °C).

Further, in one or more embodiments, the present techniques may include a specific process flow to remove contaminants, such as water. For example, the process may include an adsorbent step and a regeneration step, which form the cycle. The adsorbent step may include passing a gaseous feed stream at a feed pressure and a feed temperature through an adsorbent bed unit to separate one or more contaminants from the gaseous feed stream to form a product stream. The feed stream may be passed through the adsorbent bed in a forward direction (e.g., from the feed end of the adsorbent bed to the product end of the adsorbent bed). Then, the flow of the gaseous feed stream may be interrupted for a regeneration step. The regeneration step may include one or more depressurization steps, a purge step and one or more re-pressurization steps. The depressurization steps may include reducing the pressure of the adsorbent bed unit by a predetermined amount for each successive depressurization step, which may be a single step and/or multiple steps and may be one or more blowdown steps. The depressurization step may be provided in a forward direction or may preferably be provided in a countercurrent direction (e.g., from the product end of the adsorbent bed to the feed end of the adsorbent bed). The purge step may include passing a purge stream into the adsorbent bed unit, which may be a once through purge step and the purge stream may be provided in countercurrent flow relative to the feed stream.

The purge stream may be provided in the temperature ranges, flow rates and have compositions, as noted above. For example, the purge stream, which may include a portion of the methane in the feed stream, may include equal to or less than 20 molar % of the methane in the feed stream; or equal to or less than 10 molar % of the methane in the feed stream. Also, the purge stream flow rate may be equal to or less than 20 molar percent (%) of the feed stream flow rate; the purge stream flow rate is equal to or less than 15 molar % of the feed stream flow rate; or the purge stream flow rate is equal to or less than 10 molar % of the feed stream flow rate. Further, the purge stream flow rate may be greater than or equal to 1 molar % of the feed stream flow rate; the purge stream flow rate may greater than or equal to 3 molar % of the feed stream flow rate; or the purge stream flow rate is greater than or equal to 5 molar % of the feed stream flow rate. As another example, the purge stream may contain equal to or less than 20 molar % of the hydrocarbons, such as methane, in the feed stream; or preferably equal to or less than 10 molar % of the hydrocarbons, such as methane, in the feed stream. Further, the purge stream may contain equal to or greater than 1 molar % of the hydrocarbons, such as methane, in the feed stream; preferably equal to or greater than 3 molar % of the hydrocarbons, such as methane, in the feed stream, or preferably equal to or greater than 5 molar % of the hydrocarbons, such as methane, in the feed stream. As a specific example, the purge stream, which includes a portion of the methane from the feed stream, may include equal to or less than 20 molar % of the methane in the feed stream, equal to or less than 15 molar % of the methane in the feed stream, equal to or less than 10 molar % of the methane in the feed stream, or equal to or less than 7 molar % of the methane in the feed stream. The portion of the methane in the purge stream may be equal to or greater than 1 molar % of the methane in the feed stream; or preferably equal to or greater than 3 molar % of the methane in the feed stream; or preferably equal to or greater than 5 molar % of the methane in the feed stream.

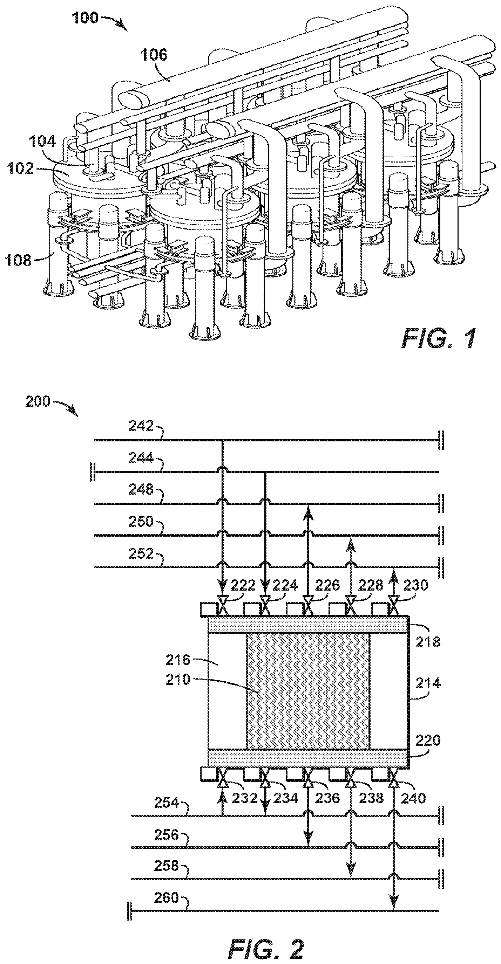

The output stream from the purge step may be conducted away for fuel in other equipment, such as the LNG plant. Then, the one or more re-pressurization steps may be performed, wherein the pressure within the adsorbent bed unit is increased with each re-pressurization step by a predetermined amount with each successive re-pressurization step. Then, the cycle may be repeated for additional streams. The cycle duration may be for a period greater than 1 second and less than 600 seconds, for a period greater than 2 second and less than 300 seconds, for a period greater than 2 seconds and less than 200 seconds, for a period greater than 1 second or 2 seconds and less than 90 seconds, or for a period greater than 2 seconds and less than 60 seconds. The present techniques may be further understood with reference to the Figures 1 to 6C below.

Figure 1 is a three-dimensional diagram of the swing adsorption system 100 having six adsorbent bed units and interconnecting piping. While this configuration is a specific example, the present techniques broadly relate to adsorbent bed units that can be deployed in a symmetrical orientation, non-symmetrical orientation and/or combination of a plurality of hardware skids. Further, this specific configuration is for exemplary purposes as other configurations may include different numbers of adsorbent bed units.

In this system, the adsorbent bed units, such as adsorbent bed unit 102, may be configured for a cyclical swing adsorption process for removing contaminants from feed streams (e.g., fluids, gaseous or liquids). For example, the adsorbent bed unit 102 may include various conduits (e.g., conduit 104) for managing the flow of fluids through, to or from the adsorbent bed within the adsorbent bed unit 102. These conduits from the adsorbent bed units 102 may be coupled to a manifold (e.g., manifold 106) to distribute the flow of the stream to, from or between components. The adsorbent bed within an adsorbent bed unit may separate one or more contaminants from the feed stream to form a product stream. As may be appreciated, the adsorbent bed units may include other conduits to control other fluid steams as part of the process, such as purge streams, depressurizations streams, and the like. Further, the adsorbent bed unit may also include one or more equalization vessels, such as equalization vessel 108, which are dedicated to the adsorbent bed unit and may be dedicated to one or more step in the swing adsorption process.

As an example, which is discussed further below in Figure 2, the adsorbent bed unit 102 may include a housing, which may include a head portion and other body portions, that forms a substantially gas impermeable partition, an adsorbent bed disposed within the housing and a plurality of valves (e.g., poppet valves) providing fluid flow passages through openings in the housing between the interior region of the housing and locations external to the interior region of the housing. Each of the poppet valves may include a disk element that is seatable within the head or a disk element that is seatable within a separate valve seat inserted within the head (not shown). The configuration of the poppet valves may be any variety of valve patterns or configuration of types of poppet valves. As an example, the adsorbent bed unit may include one or more poppet valves, each in flow communication with a different conduit associated with different streams. The poppet valves may provide fluid communication between the adsorbent bed and one of the respective conduits, manifolds or headers. The term "in direct flow communication" or "in direct fluid communication" means in direct flow communication without intervening valves or other closure means for obstructing flow. As may be appreciated, other variations may also be envisioned within the scope of the present techniques.

The adsorbent bed comprises a solid adsorbent material capable of adsorbing one or more components from the feed stream. Such solid adsorbent materials are selected to be durable against the physical and chemical conditions within the adsorbent bed unit **102** and can include metallic, ceramic, or other materials, depending on the adsorption process. Further examples of adsorbent materials are noted further below.

Figure 2 is a diagram **200** of a portion of an adsorbent bed unit having valve assemblies and manifolds in accordance with an embodiment of the present techniques. The portion of the adsorbent bed unit **200,** which may be a portion of the adsorbent bed unit **102** of Figure 1, includes a housing or body, which may include a cylindrical wall **214** and cylindrical insulation layer **216** along with an upper head **218** and a lower head **220.** An adsorbent bed **210** is disposed between an upper head **218** and a lower head **220** and the insulation layer **216,** resulting in an upper open zone, and lower open zone, which open zones are comprised substantially of open flow path volume. Such open flow path volume in adsorbent bed unit contains gas that has to be managed for the various steps. The housing may be configured to maintain a pressure between 0 bara (bar absolute) or 0.1 bara and 100 bara within the interior region.

The upper head **218** and lower head **220** contain openings in which valve structures can be inserted, such as valve assemblies **222** to **240,** respectively (e.g., poppet valves). The upper or lower open flow path volume between the respective head **218** or **220** and adsorbent bed **210** can also contain distribution lines (not shown) which directly introduce fluids into the adsorbent bed **210.** The upper head **218** contains various openings (not show) to provide flow passages through the inlet manifolds **242** and **244** and the outlet manifolds **248, 250** and **252,** while the lower head **220** contains various openings (not shown) to provide flow passages through the inlet manifold **254** and the outlet manifolds **256, 258** and **260.** Disposed in fluid communication with the respective manifolds **242** to **260** are the valve assemblies **222** to **240.** If the valve assemblies **222** to **240** are poppet valves, each may include a disk element connected to a stem element which can be positioned within a bushing or valve guide. The stem element may be connected to an actuating means, such as actuating means (not shown), which is configured to have the respective valve impart linear motion to the respective stem. As may be appreciated, the actuating means may be operated independently for different steps in the process to activate a single valve or a single actuating means may be utilized to control two or more valves. Further, while the openings may be substantially similar in size, the openings and inlet valves for inlet manifolds may have a smaller diameter than those for outlet manifolds, given that the gas volumes passing through the inlets may tend to be lower than product volumes passing through the outlets.

In swing adsorption processes, the cycle involves two or more steps that each has a certain time interval, which are summed together to be the cycle time. These steps include regeneration of the adsorbent bed following the adsorption step using a variety of methods including pressure swing, vacuum swing, temperature swing, purging (via any suitable type of purge fluid for the process), and combinations thereof. As an example, a PSA cycle may include the steps of feed or adsorption, depressurization (e.g., blowdown), purging, and re-pressurization. When performing the separation at high pressure, depressurization and re-pressurization (which may be referred to as equalization) may be performed in multiple steps to reduce the pressure change for each step and enhance efficiency. In some swing adsorption processes, such as rapid cycle swing adsorption processes, a substantial portion of the total cycle time is involved in the regeneration of the adsorbent bed. Accordingly, any reductions in the amount of time for regeneration results in a reduction of the total cycle time or cycle curation. This reduction may also reduce the overall size of the swing adsorption system.

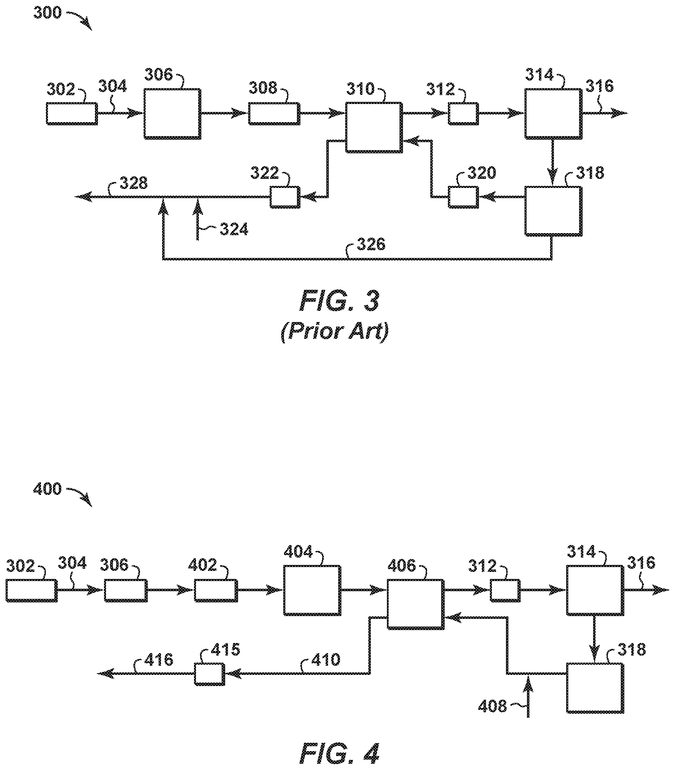

As noted above, conventional systems for dehydration is typically accomplished using TSA and PSA molecular sieve process. The conventional systems involves many hours of operation for the molecular sieve unit to both fill with adsorbed species (e.g., water) and to heat for desorption. As a result, the molecular sieve unit are very large (e.g., are a large footprint and involve more adsorbent than the present techniques). To minimize the regeneration gas volume required and to maximize bed capacity, the adsorbent beds of the molecular sieve unit is dried completely (e.g., below the desired product water activity level), which utilizes a purge gas at about 500 °F (260 °C). In addition, the conventional approaches maintain a narrow mass transfer zone, or sharp adsorption front to maximize bed utilization, while maintaining rigorous dehydration. A schematic of the conventional process integrated into an LNG plant is shown below in Figure 3.

As an example, Figure 3 is a diagram of a conventional system **300** for dehydration of a feed stream to form a liquefied natural gas (LNG) stream. As shown in the diagram **300,** various equipment, such as units **302, 306, 308, 310, 312, 314, 318, 320** and **322,** are utilized to process a feed stream in conduit **304** to produce an output stream, such as a LNG stream in conduit **316.**

The process begins at a contamination removal unit **302,** which receives an input stream and separates at least a portion of the mercury, carbon dioxide (CO₂), hydrogen sulfide (H₂S) from the input stream. The output stream from the contamination removal unit **302** is a feed stream, which is provided via conduit **304** to a heat exchanger **306.** The heat exchanger **306** is utilized to adjust the temperature of the feed stream, and may also be configured to remove a portion of the water from the stream. For example, the heat exchanger may lower the temperature of the feed stream, which results in condensation, which is conducted away from the stream. The output from the heat exchanger **306** is provided to a filter **308.** The filter **308** is configured to remove both particulate and liquid droplets from the temperature adjusted feed stream. Then, the output from the filter **308** is provided to the molecular sieve unit **310.** The molecular sieve unit **310** is configure to separate additional contaminants, such as water from the stream. The dehydrated output from the molecular sieve unit **310** is conveyed to a heat exchanger **312,** which adjusts the temperature of the stream before being passed to the LNG process unit **314.** The output stream from LNG unit **314** is a final product conveyed to sales, storage and/or shipment.

An additional stream from the LNG unit **314** may be a flash fuel stream used within the process. For example, the addition stream from the LNG unit **314** is a lower pressure high purity methane side stream, which may be provided to the fuel gas compressor unit **318.** The additional stream may be referred to as a flash fuel stream, flash gas, flash/fuel gas, or end flash gas. A portion of the compressed fuel output stream from the fuel gas compressor unit **318** is heated in a heating unit **320,** which may be a furnace or heat exchanger unit, and is configured to thermally swing the temperature for desorption of the molecular sieve unit **310.** This stream is output from molecular sieve unit **310** and passed through a heat exchanger unit **322** to cool (e.g., lower the temperature of the stream) the stream and may also be configured to remove a portion of the water from the stream. This heated stream may be combined with any remaining output of the fuel gas compressor unit **318** in conduit **326** and a boil off gas from conduit **324,** if any, to form a fuel stream in conduit **328.**

The above configuration involves using fuel gas as the purge stream for the molecular sieve unit **310.** Alternatively, the conventional approach may include a temperature swing adsorption process and may be configured to use a dry gas for regeneration and to recycle the wet regeneration gas from a compressor to the feed gas. However, this approach may increase the operation costs and the high regeneration hot gas flow rate (e.g., gas temperature equal to or greater than 500 °F (260 °C)).

As an example, the feed stream may be provided at a flow rate of 750 million standard cubic feet per day (MSCFD) (21.2 million standard cubic meter per day (MSCMD)), at a temperature of about 86 °F (30 °C) and at a pressure of about 1,175 pounds per square inch absolute (psia) (81.01 bara). The feed stream may include primarily methane along with other heavier hydrocarbons and contaminants. In particular, the methane (C₁) may be about 92 volume percent (vol. %), the other hydrocarbons (C₂+) may be about 8 vol. %, the hydrogen sulfide H₂S may be about 4 ppm, carbon dioxide may be about CO₂ of 50 ppm and the water may be about H₂O of 34 pounds per million standard cubic feet (lb/MSCF) (544 kg per million standard cubic meter (kg/MSCM)). The heat exchanger **306** may adjust the temperature of the feed stream from about 86 °F (30 °C) to about 68 °F (20 °C), which may also lessen the water to 19 lb/MSCF (304 kg/MSCM). The stream passed from the molecular sieve unit **310,** which is conveyed through the heat exchanger **312,** to the LNG process unit **314** may have a flow rate of 750 MSCFD (21.2 MSCMD),, at a temperature of 68 °F (20 °C) and pressure of 1,150 psia (79.29 bara). This stream may include less than about 0.1 ppm of water. Then, the output stream from the conduit **316** may be at 5.2 million ton per annum (MTA).

The flash fuel stream provided to the fuel gas compressor unit **318** may be provided at a flow rate of 52 MCSFD (1.5 MSCMD), which may be about 7% of the stream volume provided to the LNG process unit **314.** From the fuel gas compressor unit **318,** the additional fuel stream in conduit **326** may be 27 MSCF (0.76 MSCM) (e.g., 4 volume % of the stream provided to the LNG process unit **314**), while the stream passed through the heat exchanger **320** to the molecular sieve unit **310** may be 25 MSCFD (0.71 MSCMD) (e.g., 3 volume % of the stream provided to the LNG process unit **314**). The stream to the molecular sieve unit **310** may be at a temperature of 550 °F (287.8 °C) and at a pressure of 665 psia (45.9 bara). From the molecular sieve unit **310,** the stream conveyed to the heat exchanger **322** may be at a flow rate of 25 MSCF (0.71 MSCM) (e.g., 3 volume % of the stream provided to the LNG process unit **314**) and at a pressure of 600 psia (41.4 bara). Also, the boil off gas stream in conduit **324** may be provided at a flow rate of 19 MSCGD (e.g., 2.5 volume % of the stream provided to the LNG process unit **314**).

As noted in this example, the purge stream from the fuel gas compressor unit **318** is provided at an elevated temperature of 550 °F (287.8 °C). This high temperature purge stream may result in hydrothermal degradation of the adsorbent particles and coke formation within the adsorbent bed leading to deactivation and associated downtime.

Further, in this configuration, the purge stream contains a portion of the feed stream. For example, if the feed quantity is 750 MSCFD (21.2 MSCMD) to the molecular sieve unit **310**, the purge stream is flash gas at 25 MSCFD (0.71 MSCMD). As the compositions of all the streams are substantially similar (e.g., without a portion of the water content), the mass of the feed stream used in the purge stream may be estimated to be approximately 3.3% (e.g., 25MSCFD/750MSCFD (0.71 MSCMD/21.2 MSCMD)) the mass of the feed to the molecular sieve process. In this calculation, the concentrations of H₂S, CO₂ and H₂O are not considered.

As an enhancement, Figure 4 is an exemplary diagram **400** for dehydration of a feed stream to form a liquefied natural gas (LNG) stream in accordance with an embodiment of the present techniques. As the quantity of adsorbent materials vary linearly with the cycle time, the present techniques provide adsorbent bed units and components that involve a smaller footprint as compared to conventional systems, such as the configuration noted in Figure 3. Further, while certain units may be utilized in a manner similar to that noted above, this configuration includes a filter **404** and adsorbent bed unit **406,** which are utilized to lessen contamination of the feed stream instead of a molecular sieve unit.

Similar to the process in Figure 3, the process begins at a contamination removal unit **302,** which receives a stream and separates mercury, carbon dioxide (CO₂), hydrogen sulfide (H₂S) from the input stream. The contaminant removal system may utilize swing adsorption processes, compact contacting processes or other suitable processes. The compact contacting processes may include processes described in U.S. Patent Application Publication Nos. 20110168019; 20120238793; 20140123620; 20140331862; 20140335002; and 20150352463 and U.S. Serial Nos. 14/948422; 15/004348 and 15/009936. The output stream from the contamination removal unit **302** is a feed stream provided via conduit **304** to a heat exchanger that provides for liquid water removal **306.** The heat exchanger **306** is utilized to adjust the temperature of the feed stream and to remove water to its saturation condition at slightly below the desired feed temperature. The output from heat exchanger unit **306** is conveyed to a heat exchanger **402,** which may be a second heat exchanger, that is configured to heat the stream a predetermined amount (e.g., at least a few degrees) to lessen the percent humidity to less than 100% and avoid or lessen the risk of water condensation during the swing adsorption and desorption process. The output from heat exchanger **402** is conveyed to a filter unit **404.** The filter unit **404** is configured to remove particulate and/or liquid droplets from the stream. The output from the filter **404** is conveyed to an adsorbent bed unit **406,** which may include one or more adsorbent bed units configured to remove contaminants from the stream. The adsorbent bed unit **406** may be configured to operate a rapid cycle swing adsorption process. The adsorbent bed unit **406** may be configured to remove a sufficient portion of the H₂O from the stream, such as less than 0.1 ppm. Following adsorbent bed unit **406,** the product output of the adsorbent bed unit **406** is cooled in heat exchanger unit **312,** which is then fed into the LNG process unit **314.**

In this configuration, the flash fuel stream is provided to the fuel gas compressor unit **318.** The fuel gas compressor unit **318** compresses the low pressure high purity methane stream to increase the pressure of the resulting stream. Then, the output of fuel gas compressor unit **318** is combined with boil off gas stream provided via conduit **408** to form the purge stream. The purge stream is provided to the adsorbent bed unit **406** as the purge gas in the swing adsorption process. The purge stream combines with contaminants (e.g., water) in the adsorbent bed unit **406** to form the output purge stream. The output purge stream may be conducted away from the adsorbent bed unit **406** toward the heat exchange **415.** The heat exchanger **415** is configured to adjust the temperature of the stream and may also be configured to remove a portion of the water from the stream. Then, the conditioned stream is provided as a process fuel gas stream via conduit **416.**

This configuration utilizes a purge stream that is at lower temperatures compared to conventional molecular sieve approaches. As an example, the configuration may be utilized to treat 750 MSCFD (21.2 MSCMD) of wet feed, which involves using four adsorbent bed unit. Each of these adsorbent bed units, which are represented by adsorbent bed unit **406,** may have a 0.25 meter (m) diameter and may be 0.6 m in length. In this example, each bed is composed of parallel channels 500 by 500 micron in diameter separated by 50 micron steel walls and coated with a 60 micron layer of porous adsorbent. In this example, the typical heat capacity of the adsorber bed was 3.0 Joules per gram adsorbent per degree Kelvin (J/g adsorbent/K). Each bed contains a total of 22.1 kg of adsorbent for a total of 88.4 kg require for the entire process. In addition, the present techniques do not require a narrow mass transfer zone, thus a wide range of adsorbents can be used for rigorous water removal. These include but are not limited to silica gel, Zeolite 3A, 4A and 5A.

As an example, the feed stream may be provided at 750 MSCFD (21.2 MSCMD), at a temperature of about 86 °F (30 °C) and at a pressure of about 1,175 pounds per square inch absolute (psia) (81.01 bara). The feed stream may include primarily methane along with other hydrocarbons and contaminants. In particular, the methane (C₁) may be about 92 vol. %, the other hydrocarbons (C₂+) may be about 8 vol. %, the hydrogen sulfide H₂S may be about 4 ppm, carbon dioxide may be about CO₂ of 50 ppm and the water may be about H₂O of 34 pounds per standard cubic feet (lb/MSCF) (544 kg/MSCM). The heat exchanger **306** may adjust the temperature of the feed stream from about 86 °F (30 °C) to about 68 °F (20 °C), which may also lessen the water to 19 lb/MSCF (304 kg/MSCM). The stream is then passed through the second heat exchanger to adjust the temperature to 73 °F (22.8 °C), which is subsequently passed to the filter **404** and adsorbent bed unit **406.** Then, the output from the adsorbent bed unit **406** is conveyed through the heat exchanger **312** to the LNG process unit **314.** This stream may have a flow rate of 750 MSCFD (21.2 MSCMD), at a temperature of 68 °F (20 °C) and at a pressure of 1,150 psia (79.29 bara). This stream may include less than about 0.1 ppm of water. Then, the output stream from the conduit **316** may be at 5.2 MTA.

The flash fuel stream provided to the fuel gas compressor unit **318** may be provided at a rate of 50 MCSFD (1.4 MSCMD), which may be about 6.7 volume % of the stream provided to the LNG process unit **314.** The output from the fuel gas compressor unit **318** may be combined with the boil off gas (e.g., 11 MSCFD (0.31 MSCMD), which is 1.5 volume % of the stream provided to the LNG process unit **314**) and provided to the adsorbent bed unit **406** as the purge stream. The purge stream may be provided at a flow rate of 61 MSCFD (1.7 MSCMD) (e.g., 3 volume % of the stream provided to the LNG process unit **314**), at a temperature of 336 °F (168.9 °C) and at a pressure of 622 psia (42.9 bara). From the adsorbent bed unit **406,** the purge output stream is conveyed to the heat exchanger **415** (e.g., purge heat exchanger) and may be at a flow rate of 63 MSCFD (1.8 MSCMD) (e.g., 8.4 volume % of the stream provided to the LNG process unit **314**) at a temperature of about 240 °F (115.6 °C) and at a pressure of 600 psia (41.4 bara).

In this configuration, the purge stream contains a portion of the feed stream. For example, if the feed quantity is 750 MSCFD (21.2 MSCMD) to the adsorbent bed unit **406,** the purge stream is a combination of flash gas at 50 MSCFD (0.71 MSCMD). and boil off gas at 11 MSCFD (0.31 MSCMD). As the compositions of all the streams are substantially similar (e.g., without a portion of the water content), the mass of the feed stream used in the purge stream may be estimated to be approximately 8.1% (e.g., 61MSCFD/750MSCFD (1.7 MSCMD/21.2 MSCMD)) the mass of the feed to the swing adsorption process. In this calculation, the concentrations of H₂S, CO₂ and H₂O are not considered.

By way of example, the purge stream may include equal to or less than 20 molar % of the hydrocarbons, such as methane, in the feed stream, equal to or less than 15 molar % of the hydrocarbons, such as methane, in the feed stream, equal to or less than 10 molar % of the hydrocarbons, such as methane, in the feed stream, or equal to or less than 7 molar % of the hydrocarbons, such as methane, in the feed stream. In other examples, the purge stream may include equal to or less than 20 volume % of the feed stream, equal to or less than 15 volume % of the feed stream, equal to or less than 10 volume % of the feed stream, or equal to or less than 7 volume % of the feed stream. In other configurations, the purge stream flow rate may be equal to or less than 20 molar percent (%) of the feed stream flow rate; the purge stream flow rate may be equal to or less than 15 molar % of the feed stream flow rate; or the purge stream flow rate may be equal to or less than 10 molar % of the feed stream flow rate.

Further, the purge stream may include a portion of the feed stream. By way of example, the portion of the methane in the purge stream may be equal to or greater than 1 molar % of the methane in the feed stream; or preferably equal to or greater than 3 molar % of the methane in the feed stream; or preferably equal to or greater than 5 molar % of the methane in the feed stream. Also, the portion of the hydrocarbons in the purge stream may be equal to or greater than 1 molar % of the hydrocarbons in the feed stream; or preferably equal to or greater than 3 molar % of the hydrocarbons in the feed stream; or preferably equal to or greater than 5 molar % of the hydrocarbons in the feed stream. As yet another example, the purge stream flow rate may be equal to or greater than 1 molar percent (%) of the feed stream flow rate; the purge stream flow rate may be equal to or greater than 3 molar % of the feed stream flow rate; or the purge stream flow rate may be equal to or greater than 5 molar % of the feed stream flow rate.

In this diagram **400,** the rapid cycle adsorbent beds are regenerated via a purge step with a purge stream, which is heated only by compression. This configuration may remove any heat exchanger or furnace from the purge stream process flow. Further, in this configuration, the purge stream is provided by a combination of the compressed flash fuel stream (e.g., LNG flash gas) and the boil-off gas (BOG) in conduit **408** from the LNG storage tanks (not shown). As the purge stream is at a lower temperature, it may involve less heat than the regeneration stream in the conventional process of Figure 3.

In another embodiment, the filter **404** may be disposed between the two heat exchangers **306** and **402,** downstream of the chiller heat exchanger **306,** but upstream of the superheater heat exchanger **402.** This configuration may lessen the possibility of liquid droplet carryover into the superheater heat exchanger **402.** The purpose of the superheater heat exchanger **402** is to adjust the feed being provided to the adsorbent beds, such that it has less than (<) 100% relative humidity and the carryover of water droplets into the superheat heat exchanger **402** may hinder this purpose.

The enhancements of the present techniques are further illustrated by comparing the two processes. For example, to perform the same dehydration of a feed stream. The process in the conventional TSA molecular sieve process, as noted in Figure 3, involves three molecular sieve beds, each containing 38,102 kilograms (kg) of zeolite 4A adsorbent for a total of 114,306 kg of adsorbent. The process in the present techniques, as noted in Figure 4, involves four adsorbent bed units, which each contain 22.1 kg of zeolite 5A adsorbent for a total of 88.4 kg of adsorbent. The amount of adsorbent used in the conventional process is a factor of 1,293 larger than the amount of adsorbent required for the configuration in Figure 4. Additionally, the units for the conventional TSA molecular sieve process has a diameter of about 1.41 meters (m) and a length of about 6.7 m, while the adsorbent bed units in the present techniques have a diameter of about 0.25 m and length of 0.6 m. Accordingly, the footprint for the present techniques is significantly less than the conventional TSA molecular sieve process.

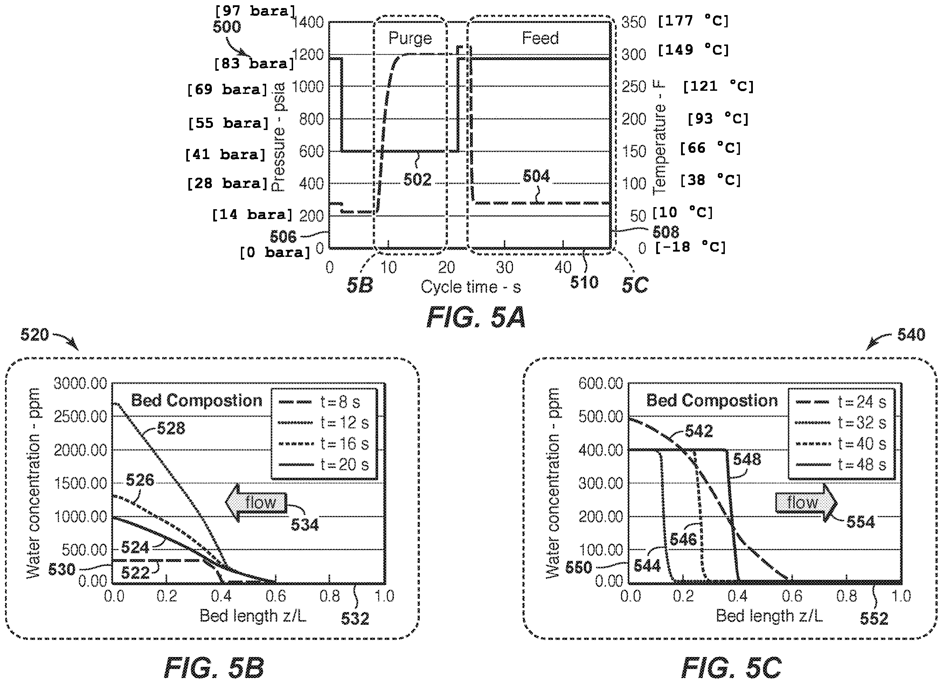

Figures 5A, 5B and 5C includes exemplary diagrams **500, 520** and **540** associated with the configuration in Figure 4 in accordance with an embodiment of the present techniques. These diagrams **500, 520** and **540** describe the timing and steps for an exemplary cycle of the swing adsorption process. In diagram **500,** the bed pressure response **502** and the bed temperature response **504** are shown along pressure axis **506** in psia [bara], the temperature axis **508** in degrees Fahrenheit (°F) [°C] with respect to the cycle time axis **510** in seconds (s) for the steps in an exemplary cycle. As an example, the cycle in Figures 5A, 5B and 5C may include performing a hold step for two second, a blowdown step for six seconds, a purge step for twelve seconds, a second hold step for two seconds, a repressurize step for two seconds and then an adsorption step for twenty-four seconds. The resulting duration for a single cycle in this configuration is forty-eight seconds.

In diagrams **520** and **540** the water concentration of the bed gas compositions are shown relative to the bed length. The response on these diagrams **520** and **540** are the water concentration in the gas phase and do not include the amount of water adsorbed in the solid adsorbent. In particular, the diagram **520** is an expanded view of the purge step performed in diagram **500.** In this diagram **520,** the responses **522, 524, 526** and **528** are shown along a water concentration axis **530** in ppm and a bed length axis **532** in normalized position along the bed length (e.g., normalized bed length (z/L)). The flow of the stream for the purge step is along the arrow **534.** The response **522** represents eight seconds into the cycle, the response **524** represents twelve seconds into the cycle, the response **526** represents sixteen seconds into the cycle and the response **528** represents twenty seconds into the cycle. These responses shows the progression of the water removal from the bed during the purge step. Further, the diagram **540** is an expanded view of the adsorption step performed in diagram **500.** In this diagram **540,** the responses **542, 544, 546** and **548** are shown along a water concentration axis **550** in ppm and a bed length axis **552** in normalized bed length z/L. The flow of the stream for the purge step is along the arrow **554.** The response **542** represents twenty-four eight seconds into the cycle, the response **544** represents thirty-two seconds into the cycle, the response **546** represents forty seconds into the cycle and the response **548** represents forty-eight seconds into the cycle. Further, the diagram **540** represents that on average only about 80% of the available bed length is utilized for adsorption.

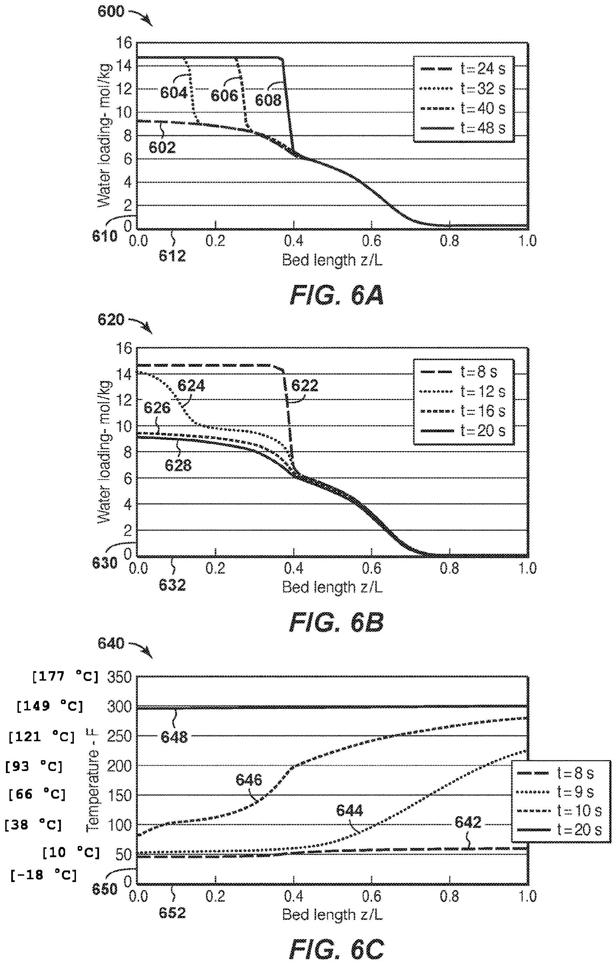

Figures 6A, 6B and 6C are exemplary diagrams **600, 620** and **640** associated with the configuration in Figure 4 in accordance with an embodiment of the present techniques. In particular, these diagrams relate to the cycle timing described in diagram **500.** These diagrams **600** and **620** further describe water loading of the bed and diagram **640** describes the temperature profiles of the bed for the timing of the steps in an exemplary cycle of the swing adsorption process. In diagram **600,** the water loading responses **602, 604, 606** and **608** are shown along water loading axis **610** in moles per kilogram (mol/kg) with respect to the bed length axis **612** in normalized bed length (z/L). The response **602** represents twenty-four seconds into the cycle, the response **604** represents thirty-two seconds into the cycle, the response **606** represents forty seconds into the cycle and the response **608** represents twenty seconds into the cycle. Each of these responses **602, 604, 606** and **608** are the water loading at the various times during the adsorption step. The leading edge of the adsorption front for each of the responses **602, 604, 606** and **608** does not increase in the latter region of the adsorbent bed. In particular, for this example, the product region of the adsorbent bed is the portion of the absorbent bed from the product end to about 25% of the bed length from the product end of the adsorbent bed and is maintained with a water loading for the product region less than about 1 mole per kilogram (mol/kg).

In diagram **620,** the water loading responses **622, 624, 626** and **628** are shown along water loading axis **630** in mol/kg with respect to the bed length axis **632** in z/L. The response **622** represents eight seconds, the response **624** represents twelve seconds, the response **626** represents sixteen seconds and the response **628** represents twenty seconds and shows the progression of the water loading from the adsorbent bed during the purge step. As shown on this diagram **620,** the water loading decreases as the purge step continues from the initial time of eight seconds (e.g., response **622)** to the end of the purge step at time of twenty seconds (e.g., response **628).** For the duration of this purge step, the water loading for the product region, as defined in Figure 6A, is less than about 1 mol/kg.

In this configuration, purge step removes water from the adsorbent bed. For example, the highest content of water is at the end of the adsorption step (e.g., response **608**), while the lowest content of water is at the end of the purge step (e.g., response **628**). As such, the concentration of water adsorbed on the feed end of the adsorbent bed is the difference between the response **608** at the feed end of the adsorbent bed and the response **628** at the feed end of the adsorbent bed divided by the response **608,** which is about 40% (e.g., (15 mol/kg - 9 mol/kg) divided by 15 mol/kg). Accordingly, the concentration of water at the feed end of the adsorbent bed adsorbed on the adsorbent bed may be at least 40% of the concentration of water adsorbed on the feed end of the adsorbent bed at the end of the duration of adsorption step; may be at least 30% of the concentration of water adsorbed on the feed end of the adsorbent bed at the end of the duration of adsorption step or may be at least 20% of the concentration of water adsorbed on the feed end of the adsorbent bed at the end of the duration of adsorption step.

In diagram **640,** the water loading response **642, 644, 646** and **648** are shown along the temperature axis **650** in °F [°C] with respect to the bed length axis **652** in z/L. The response **642** represents eight seconds into the cycle, the response **644** represents twelve seconds into the cycle, the response **646** represents sixteen seconds into the cycle and the response **648** represents twenty seconds into the cycle. These responses show the progression of the temperature of the adsorbent bed during the purge step. As shown on this diagram **640,** the temperature of the adsorbent bed increases as the purge step continues from the initial time of eight seconds (e.g., response **642**) to the end of the purge step at time of twenty seconds (e.g., response **648**).

Further, in another example, the configuration may include an integration with a Controlled Freeze Zone^{™} (CFZ) process for bulk CO₂ removal from natural gas. *See, e.g.,* U.S. Patent Application Nos. 2009/0266107 and 2010/0018248. The cryogenic controlled freeze zone is a cryogenic distillation process that separates methane from gas streams containing large amounts of CO₂. The system includes a refluxed demethanizer with a freeze zone in the middle to facilitate freezing and re-melting of the CO₂, as is known by one skilled in the art. A demethanizer overhead stream (e.g., a clean vapor methane stream) is obtained as the top product from the demethanizer of the CFZ process, while a final product stream (e.g., high pressure acid liquid product) is obtained as the bottoms product. Any heavier hydrocarbons in the feed to the CFZ recovery system are also removed as the bottoms product. For this process, dehydration is necessary upstream of the cryogenic CFZ recovery system to ensure that hydrates do not form in the cryogenic equipment.

The dehydration of the feed stream for the cryogenic CFZ recovery system may the use rapid cycle swing adsorption processes and units to dehydrate this stream. In the cryogenic controlled freeze zone recovery system, various steps may be utilized to dehydrate the stream. For example, the steps may be similar to the steps used in a configuration of Figure 4. As noted above for Figure 4, the purge stream may be provided within a specific temperature range, which may be a portion of one of the streams from the CFZ process, such as the vapor methane stream. This purge stream may be provided at pressures in the range between 450 psia (31.03 bara) and 650 psia (44.82 bara). As an example of the dehydration process steps, the adsorbent bed unit is initially repressurized and then a feed stream is dehydrated in an adsorption step. Following the adsorption step, the adsorbent bed is subjected to various regeneration steps. The regeneration steps include one or more blowdown steps, which each may lessen the pressure within the adsorbent bed unit and the final pressure may be slightly below the purge pressure. Following the blowdown steps, one or more purge steps may be performed, wherein each purge step may be provided in a counter current flow direction relative to the feed stream flow direction. The purge stream, which may be a primarily methane stream, may remove the contaminants from the adsorbent bed. In certain configurations, heat may also be added to the process to further enhance the process.

In one or more embodiments, the material may include an adsorbent material supported on a non-adsorbent support. Non-limiting examples of adsorbent materials may include alumina, microporous zeolites, carbons, cationic zeolites, high silica zeolites, highly siliceous ordered mesoporous materials, sol gel materials, aluminum phosphorous and oxygen (ALPO) materials (microporous and mesoporous materials containing predominantly aluminum phosphorous and oxygen), silicon aluminum phosphorous and oxygen (SAPO) materials (microporous and mesoporous materials containing predominantly silicon aluminum phosphorous and oxygen), metal organic framework (MOF) materials (microporous and mesoporous materials comprised of a metal organic framework) and zeolitic imidazolate frameworks (ZIF) materials (microporous and mesoporous materials comprised of zeolitic imidazolate frameworks). Other materials include microporous and mesoporous sorbents functionalized with functional groups. Examples of functional groups, which may be used for CO₂ removal, may include primary, secondary, tertiary amines and other non protogenic basic groups such as amidines, guanidines and biguanides.

In one or more embodiments, the adsorbent bed unit may be utilized to separate contaminants from a feed stream. The method may include passing a gaseous feed stream at a feed pressure through an adsorbent bed unit having an adsorbent contactor to separate one or more contaminants from the gaseous feed stream to form a product stream, wherein the adsorbent contactor has a first portion and a second portion; interrupting the flow of the gaseous feed stream; performing a depressurization step, wherein the depressurization step reduces the pressure within the adsorbent bed unit; performing a purge step, wherein the purge step reduces the partial pressure of the adsorbate within the adsorbent bed unit and wherein the purge step involves passing a purge stream to a mid-purge distribution zone between first portion and the second portion; performing a re-pressurization step, wherein the re-pressurization step increases the pressure within the adsorbent bed unit; and repeating the steps a) to e) for at least one additional cycle.

Further, in one or more embodiments, the adsorbent bed unit may include an adsorbent bed that can be used for the separation of a target gas form a gaseous mixture. The adsorbent is usually comprised of an adsorbent material supported on a non-adsorbent support, or contactor. Such contactors contain substantially parallel flow channels wherein 20 volume percent, preferably 15 volume percent or less of the open pore volume of the contactor, excluding the flow channels, is in pores greater than about 20 angstroms. A flow channel is taken to be that portion of the contactor in which gas flows, if a steady state pressure difference is applied between the point or place at which a feed stream enters the contactor and the point or place at which a product stream leaves the contactor. In the contactor, the adsorbent is incorporated into the wall of the flow channel.

In one or more embodiments, the rapid cycle swing adsorption process in the present techniques is a rapid cycle temperature swing adsorption (RCTSA) and a pressure swing adsorption (PSA). For RCTSA or combined RCTSA and RCPSA, the total cycle times are typically less than 600 seconds, less than 300 seconds, preferably less than 200 seconds, more preferably less than 100 seconds, and even more preferably less than 60 seconds.

In view of the many possible embodiments to which the principles of the disclosed invention may be applied, it should be recognized that the illustrative embodiments are only preferred examples of the invention and should not be taken as limiting the scope of the invention.

## Claims

1. A process for removing contaminants from a gaseous feed stream, the process comprising:
a) performing one or more adsorption steps; wherein each of the one or more adsorption steps comprises passing a gaseous feed stream at a feed pressure and a feed temperature through an adsorbent bed unit (406) to separate one or more contaminants from the gaseous feed stream to form a product stream;
b) performing one or more depressurization steps, wherein the pressure of the adsorbent bed unit (406) is reduced by a predetermined amount with each successive depressurization step;
c) performing one or more purge steps, wherein each of the one or more purge steps comprise passing a purge stream into the adsorbent bed unit (406), wherein the purge stream flows countercurrent to the direction of the feed stream, the purge stream is provided at a temperature at least 50 °F (27.8 °C) above the feed temperature and less than 450 °F (232.2 °C) and the purge stream flow rate is equal to or less than 20 molar % of the feed stream flow rate and the purge stream contains equal to or less than 20 molar % of the hydrocarbons in the feed stream;
d) performing one or more re-pressurization steps, wherein the pressure within the adsorbent bed unit (406) is increased with each re-pressurization step by a predetermined amount with each successive re-pressurization step;
e) repeating the steps a) to d) for at least one additional cycle, wherein the cycle duration is for a period greater than 1 second and less than 600 seconds;
passing the product stream from the adsorbent bed unit (406) to a liquefied natural gas (LNG) process unit (314);
separating a flash fuel stream from the LNG process unit (314) to be utilized as at least a portion of the purge stream;
passing the flash fuel stream to a fuel gas compressor unit (318) and compressing the flash fuel stream in the fuel gas compressor unit (318); and
combining the flash fuel stream from the LNG process unit (314) with a boil off gas stream to form the purge stream.

2. The process of claim 1, wherein the purge stream is provided in a range between 200 °F (93.3 °C) and 450 °F (232.2 °C), preferably between 250 °F (121.1 °C) and 380 °F (193.3 °C).

3. The process of any one of claims 1 to 2, wherein the gaseous feed stream is a hydrocarbon containing stream having greater than one volume percent hydrocarbons based on the total volume of the gaseous feed stream, preferably the gaseous feed stream further comprises H₂0, wherein the H₂0 is in the range of 0.2 parts per million volume to saturation levels in the gaseous feed stream, and preferably the H₂0 is in the range of 100 parts per million volume to 1500 parts per million volume.

4. The process of any one of claims 1 to 3, further comprising passing an input stream through a contamination removal unit (302) to form the gaseous feed stream, wherein the contamination removal unit (302) is configured to lower the carbon dioxide (CO₂) level to less than 100 parts per million and the hydrogen sulfide (H₂S) level to less than 4 parts per million.

5. The process of any one of claims 1 to 4, further comprising heating the gaseous feed stream to be above the dew point of water.

6. The process of claim 5, wherein heating the gas feed stream to be above the dew point of water further comprises:
passing the gaseous feed stream through a first heat exchanger (306) to lower the temperature of the gaseous feed stream;
conducting away a portion of the H₂O from the gaseous feed stream; and
passing the gaseous feed stream to a second heat exchanger (402) to increase the temperature of the gaseous feed stream.

7. The process of any one of claims 1 to 6, wherein the feed pressure is in the range between 400 pounds per square inch absolute (psia) (27.57 bara) and 1,400 psia (96.52 bara).

8. The process of any one of claims 1 to 7, wherein the cycle duration is greater than 2 seconds and less than 300 seconds.

9. The process of any one of claims 1 to 8, wherein at the end of the duration of the purge step, the concentration of water adsorbed on the adsorbent bed is at least 40% of the concentration of water adsorbed on the adsorbent bed at the end of the duration of adsorption step.

10. The process of any one of claims 1 to 9 wherein the adsorbent bed unit (406) comprises an adsorbent bed, wherein the H₂O loading for a product region of a product end of the adsorbent bed is less than 0.5 mole per kilogram, wherein the product region is a portion of the adsorbent bed from the product end of the adsorbent bed to 25% of the bed length.

11. The process of any one of claims 3 to 10, wherein the purge stream includes equal to or less than 10 molar % of the hydrocarbons in the feed stream.

12. A system for removing contaminants from a gaseous feed stream according to the process of claim 1, the system comprising:
an adsorbent bed unit (406) configured to separate contaminants from a gaseous feed stream and to output a product stream, wherein the gaseous feed stream is provided at a feed temperature;
a liquefied natural gas (LNG) process unit (314) configured to receive the product stream and separate the product stream into a final product stream and a flash fuel stream;
one or more purge units configured to provide a purge stream to the adsorbent bed unit (406), wherein the system is configured to provide the purge stream from one of a portion of the product stream, the flash fuel stream, a boil off gas stream and any combination thereof; and wherein the system is configured to provide the purge stream at a temperature at least 50 °F (27.8 °C) above the feed temperature and less than 450 °F (232.2 °C) and the purge stream containing equal to or less than 20 molar% of the hydrocarbons in the gaseous feed stream, wherein the one or more purge units comprise one or more compressors (318) configured to compress the flash fuel stream; and
a conduit configured to combine compressed flash fuel stream from the LNG process unit with a boil off gas stream to form the purge stream.

13. The system claim 12, further comprising a contamination removal unit (302) configured to receive an input stream and form the gaseous feed stream, wherein the contamination removal unit (302) is configured to lower the carbon dioxide (CO₂) level to less than 100 parts per million and the hydrogen sulfide (H₂S) level to less than 4 parts per million.

14. The system of any one of claims 12 to 13, further comprising:
a first heat exchanger (306) configured to receive the gaseous feed stream; to lower the temperature of the gaseous feed stream; and to conduct away a portion of the H₂O from the gaseous feed stream; and
a second heat exchanger (402) to increase the temperature of the gaseous feed stream from the first heat exchanger.

15. The system of any one of claims 12 to 14, wherein the system is configured to provide the product stream having a water content being less than 1 parts per million volume.

## Patentansprüche

1. Verfahren zum Entfernen von Verunreinigungen aus einem gasförmigen Einsatzmaterialstrom, bei dem
a) ein oder mehrere Adsorptionsschritte durchgeführt werden, wobei jeder des einen oder der mehreren Adsorptionsschritte Leiten eines gasförmigen Einsatzmaterialstroms bei einem Einsatzmaterialdruck und einer Einsatzmaterialtemperatur durch eine Adsorbensbetteinheit (406) umfasst, um eine oder mehrere Verunreinigungen aus dem gasförmigen Einsatzmaterialstrom abzutrennen, um einen Produktstrom zu bilden,
b) ein oder mehrere Druckentlastungsschritte durchgeführt werden, wobei der Druck der Adsorbensbetteinheit (406) mit jedem aufeinander folgenden Druckentlastungsschritt um einen vorbestimmten Betrag reduziert wird,
c) ein oder mehrere Spülschritte durchgeführt werden, wobei jeder des einen oder der mehreren Spülschritte Leiten eines Spülstroms in die Adsorbensbetteinheit (406) umfasst, wobei der Spülstrom im Gegenstrom zu der Richtung des Einsatzmaterialstroms fließt, der Spülstrom bei einer Temperatur von mindestens 27,8°C (50°F) über der Einsatzmaterialtemperatur und weniger als 232,2°C (450°F) bereitgestellt wird, und die Strömungsgeschwindigkeit des Spülstroms gleich oder weniger als 20 Mol-% der Strömungsgeschwindigkeit des Einsatzmaterialstroms ist, und wobei der Spülstrom gleich oder weniger als 20 Mol-% der Kohlenwasserstoffe in dem Einsatzmaterialstrom enthält,
d) ein oder mehrere erneute Druckbeaufschlagungsschritte durchgeführt werden, wobei der Druck innerhalb der Adsorbensbetteinheit (406) mit jedem aufeinander folgenden erneuten Druckbeaufschlagungsschritt um einen vorbestimmten Betrag mit jedem aufeinander folgenden Druckbeaufschlagungsschritt erhöht wird,
e) die Schritte a) bis d) für mindestens einen zusätzlichen Zyklus wiederholt werden, wobei die Zyklusdauer für einen Zeitraum größer als 1 Sekunde und kleiner als 600 Sekunden beträgt,
der Produktstrom aus der Adsorbensbetteinheit (406) zu einer Verfahreneinheit (314) für Flüssigerdgas (LNG) geleitet wird,
ein Flash-Brennstoffstrom aus der LNG-Verfahrenseinheit (314) abgetrennt wird, um als mindestens ein Anteil des Spülstroms genutzt zu werden,
der Flash-Brennstoffstrom zu einer Brennstoffgaskompressoreinheit (318) geleitet wird und der Flash-Brennstoffstrom in der Brennstoffgaskompressoreinheit (318) komprimiert wird, und
der Flash-Brennstoffstrom aus der LNG-Verfahrenseinheit (314) mit einem Boil-off-Gasstrom kombiniert wird, um den Spülstrom zu bilden.

2. Verfahren nach Anspruch 1, bei dem der Spülstrom in einem Bereich zwischen 93,3°C (200°F) und 232,2°C (450°F) bereitgestellt wird, vorzugsweise zwischen 121,1°C (250°F) und 193,3°C (380°F).

3. Verfahren nach einem der Ansprüche 1 bis 2, bei dem der gasförmige Einsatzmaterialstrom ein kohlenwasserstoffhaltiger Strom mit mehr als einem Volumenprozent Kohlenwasserstoffen ist, bezogen auf das Gesamtvolumen des gasförmigen Einsatzmaterialstroms, wobei vorzugsweise der gasförmige Einsatzmaterialstrom des Weiteren H₂O umfasst, wobei das H₂O im Bereich von 0,2 ppm (Teile pro Million) des Volumens bis zu Sättigungsniveaus in dem gasförmigen Einsatzmaterialstrom vorhanden ist, und wobei das H₂O vorzugsweise im Bereich von 100 Vol.ppm bis 1500 Vol.-ppm vorhanden ist.

4. Verfahren nach einem der Ansprüche 1 bis 3, bei dem des Weiteren ein Eingangsstrom durch eine Verunreinigungsentfernungseinheit (302) geleitet wird, um den gasförmigen Einsatzmaterialstrom zu bilden, wobei die Verunreinigungsentfernungseinheit (302) ausgestaltet ist, um das Niveau an Kohlendioxid (CO₂) auf weniger als 100 ppm abzusenken und das Niveau an Schwefelwasserstoff (H₂S) auf weniger als 4 ppm abzusenken.

5. Verfahren nach einem der Ansprüche 1 bis 4, das des Weiteren Erwärmen des gasförmigen Einsatzmaterialstroms umfasst, so dass er sich oberhalb des Taupunkts von Wasser befindet.

6. Verfahren nach Anspruch 5, bei dem das Erwärmen des gasförmigen Einsatzmaterialstroms, so dass er sich oberhalb des Taupunkts von Wasser befindet, umfasst, dass
der gasförmige Einsatzmaterialstrom durch einen ersten Wärmetauscher (306) geleitet wird, um die Temperatur des gasförmigen Einsatzmaterialstroms abzusenken,
ein Teil des H₂O von dem gasförmigen Einsatzmaterialstrom weggeführt wird, und
der gasförmige Einsatzmaterialstrom zu einem zweiten Wärmetauscher (402) geleitet wird, um die Temperatur des gasförmigen Einsatzmaterialstroms zu erhöhen.

7. Verfahren nach einem der Ansprüche 1 bis 6, bei dem der Einsatzmaterialdruck im Bereich von 27,57 bar absolut (400 lb/in² absolut, psia) bis 96,52 bar absolut (1400 psia) liegt.

8. Verfahren nach einem der Ansprüche 1 bis 7, bei dem die Zyklusdauer größer als 2 Sekunden und kleiner als 300 Sekunden beträgt.

9. Verfahren nach einem der Ansprüche 1 bis 8, bei dem am Ende der Dauer des Spülschritts die auf dem Adsorbensbett adsorbierte Konzentration des Wassers mindestens 40 % der Konzentration des Wassers beträgt, das auf dem Adsorbensbett am Ende der Dauer des Adsorptionsschritts adsorbiert ist.

10. Verfahren nach einem der Schritte 1 bis 9, bei dem die Adsorbensbetteinheit (406) ein Adsorbensbett umfasst, wobei die Beladung mit H₂O für eine Produktregion eines Produktendes des Adsorbensbettes weniger als 0,5 Mol pro Kilogramm beträgt, wobei die Produktregion ein Anteil des Adsorbensbettes von dem Produktende des Adsorbensbettes bis 25 % der Bettenlänge ist.

11. Verfahren nach einem der Ansprüche 3 bis 10, bei dem der Spülstrom gleich oder weniger als 10 Mol-% der Kohlenwasserstoffe in dem Einsatzmaterialstrom einschließt.

12. System zum Entfernen von Verunreinigungen aus einem gasförmigen Einsatzmaterialstrom gemäß dem Verfahren nach Anspruch 1, bei dem das System
eine Adsorbensbetteinheit (406), die ausgestaltet ist, um Verunreinigungen von einem gasförmigen Einsatzmaterialstrom zu trennen und einen Produktstrom auszugeben, wobei der gasförmige Einsatzmaterialstrom mit einer Einsatzmaterialtemperatur bereitgestellt wird,
eine Verfahrenseinheit (314) für Flüssigerdgas (LNG), die ausgestaltet ist, um den Produktstrom zu empfangen und den Produktstrom in einen Endproduktstrom und einen Flash-Brennstoffstrom zu trennen,
eine oder mehrere Spüleinheiten, die ausgestaltet sind, um der Adsorbensbetteinheit (406) einen Spülstrom bereitzustellen, wobei das System ausgestaltet ist, um den Spülstrom von einem Anteil des Produktstroms, des Flash-Brennstoffstroms, eines Boil-off-Gasstroms und jeglicher Kombination davon bereitzustellen, und wobei das System ausgestaltet ist, um den Spülstrom mit einer Temperatur von mindestens 27,8°C (50°F) oberhalb der Einsatzmaterialtemperatur und unter 232,2°C (450°F) bereitzustellen, und wobei der Spülstrom gleich oder weniger als 20 Mol-% der Kohlenwasserstoffe in dem gasförmigen Einsatzmaterialstrom enthält, wobei die eine oder mehreren Spüleinheiten einen oder mehrere Kompressoren (318) umfasst bzw. umfassen, der/die ausgestaltet ist/sind, um den Flash-Brennstoffstrom zu komprimieren, und
eine Rohrleitung umfasst, die ausgestaltet ist, um komprimierten Flash-Brennstoffstrom aus der LNG-Verfahrenseinheit mit einem Boil-off-Gasstrom zu komprimieren, um den Spülstrom zu bilden.

13. System nach Anspruch 12, das ferner eine Verunreinigungsentfernungseinheit (302) umfasst, die ausgestaltet ist, um einen Eingangsstrom zu empfangen und den gasförmigen Einsatzmaterialstrom zu bilden, wobei die Verunreinigungsentfernungseinheit (302) ausgestaltet ist, um das Niveau an Kohlendioxid (CO₂) auf weniger als 100 ppm abzusenken und das Niveau an Schwefelwasserstoff (H₂S) auf weniger als 4 ppm abzusenken.

14. System nach einem der Ansprüche 12 bis 13, das ferner einen ersten Wärmetauscher (306), der ausgestaltet ist, um den gasförmigen Einsatzmaterialstrom zu empfangen, die Temperatur des gasförmigen Einsatzmaterialstroms abzusenken und einen Anteil des H₂O von dem gasförmigen Einsatzmaterialstrom wegzuführen, und
einen zweiten Wärmetauscher (402) umfasst, um die Temperatur des gasförmigen Einsatzmaterialstroms aus dem ersten Wärmetauscher zu erhöhen.

15. System nach einem der Ansprüche 12 bis 14, das ausgestaltet ist, um den Produktstrom mit einem Wassergehalt von weniger als 1 Vol.-ppm bereitzustellen.

## Revendications

1. Procédé pour l'élimination de contaminants à partir d'un flux d'alimentation gazeux, le procédé comprenant :
a) la réalisation d'une ou plusieurs étapes d'adsorption ; chacune parmi l'étape ou les étapes d'adsorption comprenant le passage d'un flux d'alimentation gazeux à une pression d'alimentation et une température d'alimentation à travers une unité (406) à lit adsorbant pour séparer un ou plusieurs contaminants depuis le flux d'alimentation gazeux pour former un flux de produit ;
b) la réalisation d'une ou plusieurs étapes de dépressurisation, la pression de l'unité (406) à lit adsorbant étant réduite d'une quantité prédéterminée avec chaque étape de dépressurisation successive ;
c) la réalisation d'une ou plusieurs étapes de purge, chacune parmi l'étape ou les étapes de purge comprenant le passage d'un flux de purge dans l'unité (406) à lit adsorbant, le flux de purge s'écoulant à contre-courant de la direction du flux d'alimentation, le flux de purge étant fourni à une température au moins 50 °F (27,8 °C) au-dessus de la température d'alimentation et inférieure à 450 °F (232,2 °C) et le débit de flux de purge étant égal ou inférieur à 20 % molaire du débit de flux d'alimentation et le flux de purge contenant une quantité égale ou inférieure à 20 % molaire des hydrocarbures dans le flux d'alimentation ;
d) la réalisation d'une ou plusieurs étapes de re-pressurisation, la pression dans l'unité (406) à lit adsorbant étant augmentée avec chaque étape de re-pressurisation d'une quantité prédéterminée avec chaque étape de re-pressurisation successive;
e) la répétition des étapes a) à d) pendant au moins un cycle supplémentaire, la durée de cycle étant pour une période supérieure à 1 seconde et inférieure à 600 secondes ;
le passage du flux de produit de l'unité (406) à lit adsorbant à une unité (314) de traitement de gaz naturel liquéfié (LNG) ;
la séparation d'un flux de combustible flash depuis l'unité (314) de traitement de LNG pour être utilisé comme au moins une partie du flux de purge ;
le passage du flux de combustible flash à une unité (318) de compresseur de gaz de combustible et la compression du flux de combustible flash dans l'unité (318) de compresseur de gaz de combustible ; et
la combinaison du flux de combustible flash provenant de l'unité (314) de traitement de LNG avec un flux de gaz d'évaporation pour former le flux de purge.

2. Procédé selon la revendication 1, le flux de purge étant mis à disposition dans une plage entre 200 °F (93,3 °C) et 450 °F (232,2 °C), préférablement entre 250 °F (121,1 °C) et 380 °F (193,3 °C).

3. Procédé selon l'une quelconque des revendications 1 et 2, le flux d'alimentation gazeux étant un flux contenant un hydrocarbure possédant plus d'un pour cent en volume d'hydrocarbures sur la base du volume total du flux d'alimentation gazeux, préférablement le flux d'alimentation gazeux comprenant en outre H₂0, le H₂0 étant présent dans la plage de 0,2 partie par million en volume jusqu'à des taux de saturation dans le flux d'alimentation gazeux, et préférablement le H₂0 étant présent dans la plage de 100 parties par million en volume à 1 500 parties par million en volume.

4. Procédé selon l'une quelconque des revendications 1 à 3, comprenant en outre le passage d'un flux d'entrée à travers une unité d'élimination de contamination (302) pour former le flux d'alimentation gazeux, l'unité d'élimination de contamination (302) étant configurée pour abaisser le taux de dioxyde de carbone (CO₂) jusqu'à moins de 100 parties par million et le taux de sulfure d'hydrogène (H₂S) jusqu'à moins de 4 parties par million.

5. Procédé selon l'une quelconque des revendications 1 à 4, comprenant en outre le chauffage du flux d'alimentation gazeux pour être au-dessus du point de rosée de l'eau.

6. Procédé selon la revendication 5, le chauffage du flux d'alimentation de gaz pour être au-dessus du point de rosée de l'eau comprenant en outre :
le passage du flux d'alimentation gazeux à travers un premier échangeur de chaleur (306) pour abaisser la température du flux d'alimentation gazeux ;
l'évacuation d'une partie du H₂O du flux d'alimentation gazeux ; et
le passage du flux d'alimentation gazeux vers un deuxième échangeur de chaleur (402) pour augmenter la température du flux d'alimentation gazeux.

7. Procédé selon l'une quelconque des revendications 1 à 6, la pression d'alimentation étant dans la plage entre 400 livres par pouce carré absolu (psia) (27,57 bara) et 1 400 psia (96,52 bara).

8. Procédé selon l'une quelconque des revendications 1 à 7, la durée de cycle étant supérieure à 2 secondes et inférieure à 300 secondes.

9. Procédé selon l'une quelconque des revendications 1 à 8, dans lequel à la fin de la durée de l'étape de purge, la concentration d'eau adsorbée sur le lit adsorbant étant d'au moins 40 % de la concentration d'eau adsorbée sur le lit adsorbant à la fin de la durée de l'étape d'adsorption.

10. Procédé selon l'une quelconque des revendications 1 à 9, l'unité (406) à lit adsorbant comprenant un lit adsorbant, la charge en H₂O pour une région de produit d'une extrémité de produit du lit adsorbant étant inférieure à 0,5 mole par kilogramme, la région de produit étant une partie du lit adsorbant depuis l'extrémité de produit du lit adsorbant jusqu'à 25 % de la longueur de lit.

11. Procédé selon l'une quelconque des revendications 3 à 10, le flux de purge comportant une quantité égale ou inférieure à 10 % molaire des hydrocarbures dans le flux d'alimentation.

12. Système pour l'élimination de contaminants à partir d'un flux d'alimentation gazeux selon le procédé selon la revendication 1, le système comprenant :
une unité (406) à lit adsorbant configurée pour séparer des contaminants à partir d'un flux d'alimentation gazeux et pour sortir un flux de produit, le flux d'alimentation gazeux étant fourni à une température d'alimentation ;
une unité (314) de traitement de gaz naturel liquéfié (LNG) configurée pour recevoir le flux de produit et séparer le flux de produit en un flux de produit final et un flux de combustible flash ;
une ou plusieurs unités de purge configurées pour fournir un flux de purge à l'unité (406) à lit adsorbant, le système étant configuré pour fournir le flux de purge à partir d'un parmi une partie du flux de produit, du flux de combustible flash, d'un flux de gaz d'évaporation et une quelconque combinaison correspondante ; et le système étant configuré pour fournir le flux de purge à une température au moins 50 °F (27,8 °C) au-dessus de la température d'alimentation et inférieure à 450 °F (232,2 °C) et le flux de purge contenant une quantité égale ou inférieure à 20 % molaire des hydrocarbures dans le flux d'alimentation gazeux, l'unité ou les unités de purge comprenant un ou plusieurs compresseurs (318) configurés pour comprimer le flux de combustible flash ; et
une conduite configurée pour combiner le flux de combustible flash comprimé provenant de l'unité de traitement de LNG avec un flux de gaz d'évaporation pour former le flux de purge.

13. Système selon la revendication 12, comprenant en outre une unité d'élimination de contamination (302) configurée pour recevoir un flux d'entrée et former le fluide d'alimentation gazeux, l'unité d'élimination de contamination (302) étant configurée pour abaisser le taux de dioxyde de carbone (CO₂) jusqu'à moins de 100 parties par million et le taux de sulfure d'hydrogène (H₂S) jusqu'à moins de 4 parties par million.

14. Système selon l'une quelconque des revendications 12 et 13, comprenant en outre :
un premier échangeur de chaleur (306) configuré pour recevoir le flux d'alimentation gazeux ; pour abaisser la température du flux d'alimentation gazeux ; et pour évacuer une partie du H₂O du fluide d'alimentation gazeux ; et
un deuxième échangeur de chaleur (402) pour augmenter la température du fluide d'alimentation gazeux provenant du premier échangeur de chaleur.

15. Système selon l'une quelconque des revendications 12 à 14, le système étant configuré pour fournir le flux de produit possédant une teneur en eau qui est inférieure à 1 partie par million en volume.
